# EUROPEAN PATENT SPECIFICATION

(11) **EP 4 178 832 B1**
(45) Date of publication and mention of the grant of the patent: **29.11.2023**
(21) Application number: 21783595.8
(22) Date of filing: 06.10.2021
(51) Int. Cl.: B60N 2/16, B60N 2/90

(54) **ADJUSTING ASSEMBLY FOR A HEIGHT ADJUSTING DEVICE FOR A VEHICLE SEAT**
VERSTELLANORDNUNG FÜR EINE HÖHENVERSTELLVORRICHTUNG FÜR EINEN FAHRZEUGSITZ
ENSEMBLE DE RÉGLAGE POUR UN DISPOSITIF DE RÉGLAGE DE HAUTEUR POUR UN SIÈGE DE VÉHICULE

(30) Priority: 14.10.2020 IT 202000024196
(43) Date of publication of application: 17.05.2023
(73) Proprietor: MARTUR ITALY S.R.L., 20121 Milano (IT)
(72) Inventor: ÜSTÜNBERK, Can, 10095 Grugliasco (TO) (IT); HIREMATH, Prasanna, 10095 Grugliasco (TO) (IT); ADAMO, Giorgio, 10095 Grugliasco (TO) (IT); DOGAN, Anil, 10095 Grugliasco (TO) (IT)
(74) Representative: Robba, Pierpaolo
(86) International application number: PCT/IB2021/059172
(87) International publication number: WO 2022/079549

(56) References cited:
- US-A1- 2017 240 069
- US-A1- 2020 086 771
- US-B2- 6 675 945

## Description

### Technical Field

The present invention relates to an adjusting assembly for a height adjusting device intended to be used for adjusting the height of a vehicle seat relative to the vehicle floor.

The present invention also relates to a height adjusting device for a vehicle seat provided with such an adjusting assembly.

### Background Art

Vehicle seats generally have a sliding function for pushing or pulling the seat cushion in a forward or backward direction, a height adjustment function for adjusting the height of the seat cushion and a reclining function for adjusting the inclination of the seat backrest relative to the seat cushion.

The aforesaid height adjustment function can be implemented by several kinds of mechanisms which are known to the person skilled in the art and which are usually arranged between the bottom of the seat cushion and the tracks to which the seat cushion is slidably mounted.

The height adjusting mechanism is controlled by an adjusting assembly which, in turn, is driven by an actuating element. In case of electrically operated height adjusting devices, in general such actuating element is an electric motor. In case of manually operated height adjusting devices, such actuating element can be, for instance, a lever that can be grasped by the user.

The adjusting assembly is provided with an output element which is intended to drive the height adjusting mechanism in order to modify the height of the vehicle seat, i.e. the distance of the seat cushion from the vehicle floor.

Under normal conditions, the adjusting assembly is in a unlocked configuration, so that there is no transmission of motion from the actuating element and the out element. As a result, the output element does not move and, correspondingly, the height of the vehicle seat is at a predetermined value.

If the user wishes to modify the height of the vehicle seat, he/she can act onto the actuating element of the adjusting assembly. Upon triggering of the actuating element, the adjusting assembly is switched to a locked configuration, in which the actuating element is in a motion transmission connection with the output element; as a result, the output element moves and drives the height adjusting mechanism. When a new, desired height of the vehicle seat is obtained, the actuating element is released and the adjusting assembly shifts back to the unlocked configuration.

Adjusting assemblies for height adjusting devices are shown, for instance, in documents FR 2 921597, WO 2019/011370, EP 1 498 302, US 2010/0206679 and DE 102005022722.

Further examples of adjusting assemblies for height adjusting devices can be found, for instance in documents US 2020/086771, US 2017/240069 and US 6 675 945.

However, the adjusting assemblies according to prior art are not free from drawbacks.

First of all, if the locked configuration of the adjusting assembly is obtained by friction between two components of the assembly, the engagement between such components is strongly affected by the material and geometry of the components themselves, so that high mechanical losses can occur if the aforesaid parameters are not properly selected.

Moreover, as the locking is obtained by friction, this configuration does not allow to obtain a locking with positive engagement.

Secondly, some kinds of known adjusting assembly have a high number of components and a large overall size.

A high number of components involves high manufacturing tolerance variations, high manufacturing costs and assembling costs as well as a complex structure and an increased risk of failure or malfunctioning.

A large overall size is an undesirable drawback in the field of vehicle seat, for several reasons: the passenger compartment of the vehicle usually has a limited space, which has to be optimized; a large overall size usually corresponds to a large overall weight, while excessive weight has to be avoided when designing a vehicle seat and the corresponding accessories; a large overall size usually turns out to correspond to a bulky item, with an unpleasant aspect.

The object of the invention is to overcome the drawbacks and limitations of prior art by providing an adjusting assembly for a height adjusting device which has a limited number of components and a limited overall size, and in which mechanical losses in the transmission of motion from the actuating element to the output element are minimized.

Another object of the present invention is to provide an adjusting assembly for a height adjusting device which allows to modify the height of the vehicle seat over a wide interval of values and, at the same time, allows for the fine regulation of the vehicle seat height.

These and other objects are achieved by the adjusting assembly as claimed in the appended claims, as well as by a height adjusting device incorporating such adjusting assembly.

### Summary of Invention

The adjusting assembly according to the invention comprises an output element through which a height adjusting mechanism can be actuated in order to modify the height of a vehicle seat.

The adjusting assembly is designed so as to switchable form a unlocked configuration - in which the output element does not move and the height of the vehicle seat is stably maintained at a previously selected height - to a locked configuration - in which the output element is moved for modifying the height of the vehicle seat.

The adjusting assembly can be switched for the unlocked configuration to the locked configuration by acting on an actuating element (such as a lever).

To this purpose, according to the invention, the adjusting assembly comprises a rim provided with internal gear and at least one locking pawl provided with teeth on its outer surface: the at least one locking pawl can be moved by the actuating element from a first, unlocked configuration, in which its teeth are away from the teeth of the internal gear of the rim and disengaged therefrom, to a second locked configuration, in which its teeth are close to a corresponding portion of the internal gear of the rim and engaged therewith.

When the teeth of locking pawl are engaged with the teeth of the internal gear of the rim, a motion transmission connection is established between the actuating element and the output element and the height of the vehicle seat can be adjusted to the desired value. Such engagement is firm and reliable and it is not dependent (or scarcely dependent) from the nature of the materials used for manufacturing the locking pawl and the rim as well as from the geometry of the locking pawl and of the rim.

Therefore, mechanical losses between the actuating element and the output element are advantageously minimized.

According to a preferred embodiment of the invention the actuating element is provided with a peg and the locking pawl is provided with a slot receiving the peg. Upon triggering of the actuating element, the peg - by engaging the edge of the slot - can move the locking pawl so as to bring it closer to the inner circumference of the rim, whereby the teeth of the pawl engage the teeth of the internal gear of the rim, or to move it away from the inner circumference of the rim, whereby the teeth of the pawl are not engaged with the teeth of the internal gear of the rim.

According to a preferred embodiment of the invention, the adjusting assembly comprises two locking pawls, i.e. an upper pawl and a lower pawl.

Starting from a neutral position, the upper pawl can be rotated in a first direction, while the lower pawl can be rotated in a second, opposite direction.

Preferably, the upper pawl can be rotated in a first direction up to a predetermined maximum angle, while the lower pawl can be rotated in a second, opposite direction up to a predetermined maximum angle.

To this purpose, a limiting element can be provided in order to prevent the upper of lower pawl from being rotated beyond said predetermined maximum angle.

In a preferred embodiment of the invention, such limiting element is a slot receiving the peg of the actuating element, whereby the length of said slot determines the maximum rotation angle for the locking pawls in the first and second direction.

### Brief Description of Drawings

Further features and advantages of the invention will become more evident from the detailed description of some preferred embodiments thereof, given by way of non limiting example, with reference to the attached drawing, in which:
**Fig.1**

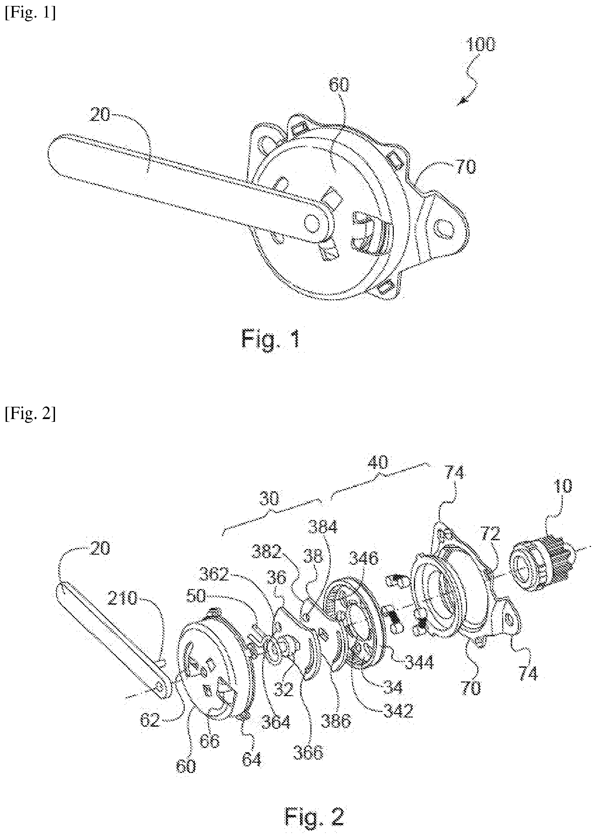

   [Fig.1] is a perspective view of an adjusting assembly for a height adjusting device according to the invention.
**Fig.2**
   [Fig.2] is an exploded view of the adjusting assembly of [Fig.1].
**Fig.3a**

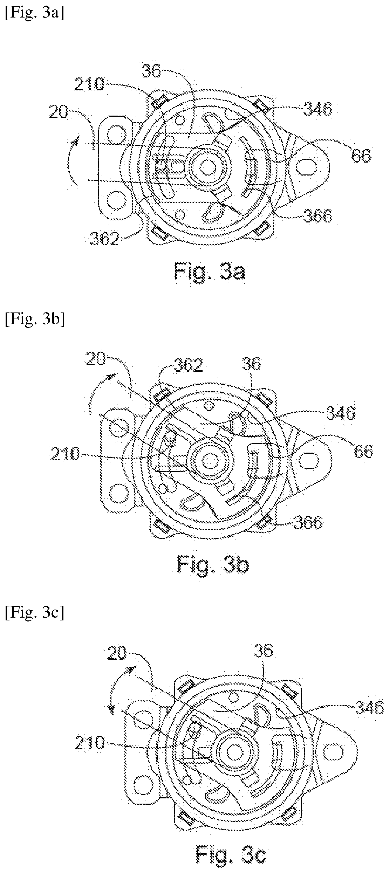

   [Fig.3a] the upper locking pawl of the adjusting assembly of Figures 1 and 2 in an operative configuration.
**Fig.3b**
   [Fig.3b] the upper locking pawl of the adjusting assembly of Figures 1 and 2 in another operative configuration.
**Fig.3c**
   [Fig.3c] the upper locking pawl of the adjusting assembly of Figures 1 and 2 in a further operative configuration.
**Fig.4a**

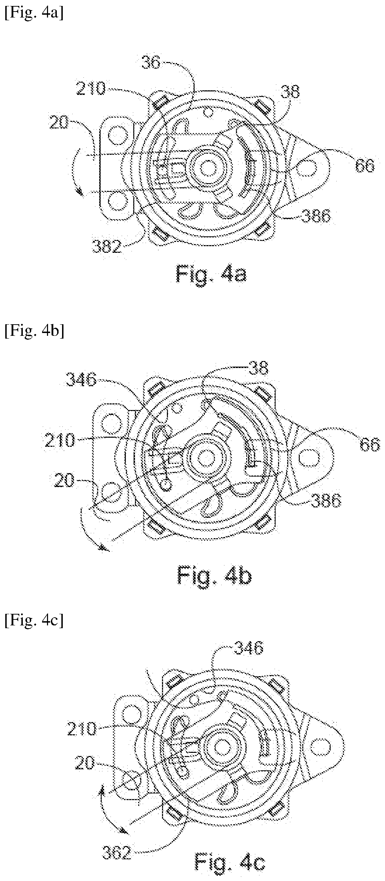

   [Fig.4a] the lower locking pawl of the adjusting assembly of Figures 1 and 2 in an operative configuration.
**Fig.4b**
   [Fig.4b] the lower locking pawl of the adjusting assembly of Figures 1 and 2 in another operative configuration.
**Fig.4c**
   [Fig.4c] the lower locking pawl of the adjusting assembly of Figures 1 and 2 in a further operative configuration.

### Description of Embodiments

In general, a vehicle seat can be provided with a height adjusting device for varying the distance of the bottom of the vehicle seat from the vehicle floor. Such height adjusting device includes a height adjusting mechanism and an adjusting assembly for controlling the operation of the height adjusting mechanism.

With reference to [Fig.1] and 2, an adjusting assembly 100 for a height adjusting mechanism (not shown) of a height adjusting device for a vehicle seat is shown.

The adjusting assembly 100 includes an output element 10 for driving the height adjusting mechanism. In the shown embodiment, the output element is in the form of a pinion 10 that can mesh with a corresponding element of the height adjusting mechanism.

The adjusting assembly 100 further comprises an actuating element 20 for triggering motion of the pinion 10 and, as a consequence, a variation in the height of the vehicle seat.

In the shown embodiment, which refers to a manually operated height adjusting assembly, the actuating element can be made as a lever 20 that can be grasped by the user when he/she wishes to modify the height of the vehicle seat.

The adjusting assembly further comprises a motion transmission unit for transmitting motion from the actuating element (lever 20) to the output element (pinion 10), which motion transmission unit includes a driving sub-unit 30 and a braking sub-unit 40.

The driving sub-unit 30 includes a shaft 32, which is fastened to the lever 20 and engages the pinion 10.

The driving sub-unit 30 further includes a plate 34, which is arranged between the shaft 32 and the pinion 10 and is provided with a central window 342 for the passage of the pinion 10. The plate 34 is further provided with an outer projecting rim 344 equipped with an internal gear 346.

The driving sub-unit 30 further includes at least one locking pawl which can be switched between a locked configuration and an unlocked configuration.

In the shown embodiment, the driving sub-unit 30 includes two locking pawls, namely an upper locking pawl 36 and a lower locking pawl 38.

Each locking pawl 36, 38 is provided on a surface thereof with radially projecting teeth 362, 382 which can engage the teeth of the internal gear 346 of the rim 344 of the plate 34.

Each locking pawl can be switched between an unlocked configuration, in which its teeth 362, 382 are disengaged from the internal gear 346 of the rim 344 of the plate 34, and a locked configuration, in which its teeth 362, 382 engage a portion of the internal gear 346 of the rim 344 of the plate 34.

When one of the locking pawl is in a locked configuration, the lever 20 is connected to the plate 34 through the locking pawl, while when both the locking pawls are in an unlocked configuration, the lever 20 is disconnected from the plate 34.

In the shown embodiment, in order to switch the locking pawls 36, 38 between the unlocked and the locked configuration, each locking pawl is provided with an inclined slot 364, 384, the inclined slots of the locking pawls being partially overlapped to each other. The actuating lever 20 is correspondingly provided with a peg 210 which is received in the intersection of the overlapping slots 364, 384.

By rotating the actuating lever 20 against the elastic resistance of a resilient member 50 (such as a torsion spring 50), the peg 210 can engage the edge of the slot of a corresponding locking pawl, thus driving the movement of said locking pawl from the unlocked to the locked configuration.

In the shown embodiment, in which two different locking pawls 36, 38 are provided, the inclined slots 364, 384 are designed so that a first locking pawl 36 (or upper locking pawl 36) can be rotated in a first direction by the actuating lever 20, while a second locking pawl 38 (or lower locking pawl 38) can be rotated in a second, opposite direction by the actuating lever 20. Namely, the upper locking pawl 36 can be rotated in a clockwise direction, while the lower locking pawl 38 can be rotated in a counter-clockwise direction.

The adjusting assembly is preferably provided with a limiting element in order to limit rotation of the locking pawls, so that the upper locking pawl 36 can be rotated in a first direction up to a determined maximum angle and the lower locking pawl 38 can be rotated in the second, opposite direction up to a determined maximum angle.

In the shown embodiment, the adjusting assembly is provided with a cover 60 including a slit 62 which receives the peg 210 of the actuating lever 20 and along which said peg can travel.

Therefore, the length of the slit 62 determines the maximum rotation angle in either direction. The slit 62 is preferably designed so that the maximum rotation angle in the first direction and the maximum rotation angle in the second direction are the same, e.g. about 30°.

The cover 60 also has the function of encasing the components of the adjusting assembly 100 and connecting it to a support 70 that can be fixed to the vehicle seat.

To this purpose, the cover 60 and the support 70 are provided with co-operating fastening means 64, 72, and the support 70 is also provided with fastening brackets 74 for being fixed to a vehicle seat.

The operation of the adjusting assembly 100 of the invention is disclosed here below with reference to Figures 3a - 3c and Figures 4a - 4c.

Referring at first to Figures 3a - 3c, adjustment of the height of the vehicle seat in a first direction is shown.

Starting from a neutral position (i.e. with the actuating lever 20 in a horizontal position in the Figures), in which both the locking pawls 36, 38 are in the unlocked configuration, the actuating lever is rotated in clockwise direction, i.e. upwards in the Figures, by winning the elastic resistance of the torsion spring 50.

Initially, the peg 210 of the actuating lever 20 engages the edge of the inclined slot 364 of the upper locking pawl 36 and moves said upper locking pawl closer to the circumference of the rim 344 of the plate 34, so that the radial teeth 362 of the upper locking pawl 36 engage the internal gear 346 of said rim 344. The upper locking pawl 36 has therefore switched to the locked configuration.

This first stage corresponds to a very little rotation of the actuating lever, e.g. of about 3°.

With the upper locking pawl 36 in the locked configuration, the actuating lever 20 is further rotated so that the height of the vehicle seat can be modified. The amplitude of the rotation of the actuating lever is proportional to the amount of the variation in the height of the vehicle seat.

When the obtained variation is obtained, the actuating lever 20 is released.

Thanks to the torsion spring 50, once released, the actuating lever 20 is brought back to the neutral position by a rotation in a counter-clockwise direction.

During a first stage of such counter-clockwise direction, the peg 210 drives the upper locking pawl from the locked configuration to the unlocked configuration, thus disengaging the teeth 362 of the upper locking pawl 36 from the internal gear 346 of the rim 344 of the plate 34.

Then, with the upper locking pawl 36 disengaged, the actuating lever 20 and the upper locking pawl 36 both rotate in the counter-clockwise direction.

Such rotation is braked by the braking sub-unit 40 so that the actuating lever stops at the initial position.

During all the above procedure, the lower locking pawl 38 is kept in the unlocked configuration.

To this purpose, the lower locking pawl 38 is provided with a stepped slot 386, including a narrower portion and a wider portion.

The cover 60 is correspondingly provided with a tab 66 which is received in the stepped slot 386. When the actuating lever is rotated in the first direction, the tab 66 travels along the narrower portion of the stepped slot 386, so that it keeps the lower locking pawl 38 away from the internal gear 346 of the rim 344 of the plate 34.

The upper locking pawl 36 is provided with a stepped slot 366, as well, and said stepped slot is overlapped to the stepped slot of the lower locking pawl 36, so that the tab 66 of the cover 60 penetrates through the overlapping stepped slots 366, 386.

However, when the actuating lever is rotated in the first direction, the tab 66 travel along the wider portion of the stepped slot 366, so that the upper locking pawl 36 is free to switch from the unlocked configuration to the locked configuration.

Referring now to Figures 4a - 4c, adjustment of the height of the vehicle seat in a second, opposite direction is shown.

Starting from a neutral position (i.e. with the actuating lever 20 in a horizontal position in the Figures) in which both the locking pawls 36, 38 are in the unlocked configuration, the actuating lever is rotated in counter-clockwise direction, i.e. downwards in the Figures, by winning the elastic resistance of the torsion spring 50.

Initially, the peg 210 of the actuating lever 20 engages the edge of the inclined slot 384 of the lower locking pawl 38 and moves said lower locking pawl closer to the circumference of the rim 344 of the plate 34, so that the radial teeth 382 of the lower locking pawl engage the internal gear 346 of said rim 344. The lower locking pawl 38 has therefore switched to the locked configuration.

This first stage corresponds to a very little rotation of the actuating lever, e.g. of about 3°.

With the lower locking pawl 38 in the locked configuration, the actuating lever 20 is further rotated so that the height of the vehicle seat can be modified. The amplitude of the rotation of the actuating lever is proportional to the amount of the variation in the height of the vehicle seat.

When the obtained variation is obtained, the actuating lever 20 is released.

Thanks to the torsion spring 50, once released, the actuating lever 20 is brought back to the neutral position by a rotation in a clockwise direction.

During a first stage of such clockwise direction, the peg 210 drives the lower locking pawl from the locked configuration to the unlocked configuration, thus disengaging the teeth 382 of the lower locking pawl 38 from the internal gear 346 of the rim 344 of the plate 34.

Then, with the lower locking pawl 38 disengaged, the actuating lever 20 and the lower locking pawl 38 both rotate in the clockwise direction. Such rotation is braked by the braking sub-unit 40 so that the actuating lever stops at the initial position.

During all the above procedure, the upper locking pawl 36 is kept in the unlocked configuration, since the tab 66 of the cover 60 travels along the narrower portion of the stepped slot 366 of said upper locking pawl 36.

It will be evident from the above that the adjusting assembly according to the invention allows to adjust the height of a vehicle seat over a wide interval of values and, at the same time, allows for a fine regulation of the vehicle seat height.

It will be also evident to the person skilled in the art that the above description of a preferred embodiment of the invention has been given merely by way of example and several variants and modifications within the reach of the person skilled in the art can be envisaged, without departing from the scope of the invention as defined by the appended claims.

## Claims

1. Adjusting assembly (100) for a height adjusting mechanism of a height adjusting device for a vehicle seat, said adjusting assembly comprising an output element (10), an actuating element (20) and a motion transmission unit for selectively transmitting motion from said actuating element (20) to said output element (10), wherein said motion transmission unit includes a driving sub-unit (30) and a braking sub-unit (40) and wherein said driving sub-unit 30 includes a shaft (32) for driving the output element (10), wherein said driving sub-unit (30) further includes a plate (34), which is provided with an outer projecting rim (344) equipped with an internal gear (346), and at least one locking pawl (36, 38), which is provided on a surface thereof with radially projecting teeth (362, 382), wherein said at least one locking pawl (36, 38) is switchable between an unlocked configuration, in which its teeth (362, 382) are disengaged from said internal gear (346) of said rim of said plate and in which said actuating element is disconnected from said output element, and a locked configuration, in which its teeth (362, 382) engage a portion of said internal gear (346) of said rim of said plate and said actuating element is in motion connection transmission with said output element, **characterized in that** said at least one locking pawl (36, 38) is driven by a peg (210) provided on said actuating element (20) so that it can be switched between said unlocked configuration and said locked configuration.

2. Adjusting assembly (100) according to claim 1, wherein said at least one locking pawl (36, 38) is provided with an inclined slot (364, 384) and wherein said peg (210) provided on said actuating element (20) is received in said inclined slot (364, 384) and can engage the edge of said inclined slot for moving said at least one locking pawl from the unlocked configuration to the locked configuration and/or vice versa.

3. Adjusting assembly (100) according to claim 1, wherein said actuating element moves said at least one locking pawl from the unlocked configuration to the locked configuration against the elastic resistance of a resilient member (50).

4. Adjusting assembly (100) according to any one of the preceding claims, wherein two locking pawls (36, 38), i.e. an upper locking pawl (36) and a lower locking pawl (38) are provided.

5. Adjusting assembly (100) according to claims 2 and 4, wherein the inclined slots (364, 384) of said locking pawls (36, 38) are at least partially overlapped to each other and said peg (210) penetrates through the intersection of said inclined slots.

6. Adjusting assembly (100) according to claim 4, wherein said inclined slots (364, 384) are designed so that a first locking pawl (36) can be rotated in a first direction by the actuating element, while a second locking pawl (38) can be rotated in a second, opposite direction by the actuating element.

7. Adjusting assembly (100) according to claim 6, further comprising a limiting element (62) in order to limit rotation of said locking pawls.

8. Adjusting assembly (100) according to claim 7, wherein said adjusting assembly is provided with a cover (60) including a slit (62) which receives said peg (210) of said actuating element (20) and along which said peg can travel.

9. Adjusting assembly (100) according to claim 6, wherein said locking pawls are provided with respective stepped slots (366, 386), overlapped to each other, wherein said adjusting assembly is provided with a cover (60) including a tab (66) which penetrates into said overlapping stepped slots (366, 386), wherein each of said steppes slots includes a narrower portion and a wider portion, and wherein said tab (66) travels along the wider portion of the stepped slot of said upper locking pawl and along the narrower portion of the stepped slot of said lower locking pawl when said upper locking pawl is rotated in a first direction, while said tab (66) travels along the wider portion of the stepped slot of said lower locking pawl and along the narrower portion of the stepped slot of said upper locking pawl when said lower locking pawl is rotated in a second, opposite direction.

10. Height adjusting device for a vehicle seat comprising a height adjusting mechanism and an adjusting assembly according to any of claims 1 - 9.1

## Patentansprüche

1. Verstellanordnung für einen Höhenverstellmechanismus einer Höhenvorstellvorrichtung für einen Fahrzeugsitz, wobei die Verstellanordnung ein Ausgabeelement (10), ein Betätigungselement (20) und eine Bewegungsübertragungseinheit zum selektiven Übertragen von Bewegung von dem Betätigungselement (20) auf das Ausgabeelement (10) aufweist, wobei die Bewegungsübertragungseinheit eine antreibende Untereinheit (30) und eine bremsende Untereinheit (40) aufweist und wobei die antreibende Untereinheit (30) eine Welle (32) zum Antreiben des Ausgabeelements (10) aufweist, wobei die antreibende Untereinheit (30) eine Platte (34), die mit einem äußeren vorstehenden Rand (344) versehen ist, der mit einem inneren Zahnkranz (346) versehen ist, und wenigstens eine Sperrklinke (36, 38), die an einer Oberfläche mit radial vorstehenden Zähnen (362, 382) versehen ist, aufweist, wobei die wenigstens eine Sperrklinke (36, 38) zwischen einer offenen Position, in der ihre Zähne (362, 382) von dem inneren Kranz (346) des Randes der Platte gelöst sind und in dem das Betätigungselement von dem Ausgabeelement entkoppelt ist, und einer gesperrten Position, in der ihre Zähne (362, 382) in einen Teil des inneren Zahnkranzes (346) des Randes der Platte eingreifen und das Betätigungselement mit dem Ausgabeelement in Bewegung übertragender Verbindung steht, **dadurch gekennzeichnet, dass** die wenigstens eine Sperrklinke (36, 38) von einem Zapfen (210) angetrieben wird, der an dem Betätigungselement (20) vorgesehen ist, so dass sie aus der offenen Position in die gesperrte Position geschaltet werden kann.

2. Verstellanordnung (100) nach Anspruch 1, wobei die wenigstens eine Sperrklinke (36 ,38) mit einem geneigten Schlitz (364, 384) versehen ist und wobei der Zapfen (210), der an dem Betätigungselement (20) vorgesehen ist, in dem geneigten Schlitz (364, 384) sitzt und auf den Rand des geneigten Schlitzes einwirken kann, um die wenigstens eine Sperrklinke aus ihrer offenen Position in ihre gesperrte Position zu bewegen und/oder umgekehrt.

3. Verstellanordnung nach Anspruch 1, wobei das Betätigungselement die wenigstens eine Sperrklinke aus ihrer offenen Position in ihre gesperrte Position gegen den elastischen Widerstand eines Federteils (50) bewegt.

4. Verstellanordnung (100) nach einem der vorstehenden Ansprüche, wobei zwei Sperrklinken (36, 38), d. h. eine obere Sperrklinke (36) und eine untere Sperrklinke(38), vorgesehen sind.

5. Verstellanordnung (100) nach Anspruch 2 und 4, wobei die geneigten Schlitze (364, 384) der Sperrklinken (36, 38) zumindest teilweise miteinander überlappen und der Zapfen (210) in die Kreuzung der geneigten Schlitze hineinragt.

6. Verstellanordnung (100) nach Anspruch 4, wobei die geneigten Schlitze (364, 364) so ausgelegt sind, dass eine erste Sperrklinke (36) von dem Betätigungselement in eine erste Richtung gedreht werden kann, während eine zweite Sperrklinke (38) von dem Betätigungselement in eine zweite, entgegengesetzte Richtung gedreht werden kann.

7. Verstellanordnung (100) nach Anspruch 6 zusätzlich mit einem Begrenzungselement (260), um eine Drehung der Sperrklinken zu begrenzen.

8. Verstellanordnung nach Anspruch 7, wobei die Verstellanordnung mit einer Abdeckung (60) versehen ist, die einen Schlitz (62) aufweist, der den Zapfen (210) des Betätigungselement (20) aufnimmt und in dem sich der Zapfen bewegen kann.

9. Verstellanordnung (100) nach Anspruch 6, wobei die Sperrklinken mit entsprechenden gestuften Schlitzen (366, 368) versehen sind, die einander überlappen, wobei die Verstellanordnung mit einer Abdeckung (60) versehen ist, die eine Nase (66) aufweist, die in die überlappenden gestuften Schlitze (366, 368) hineinragt, wobei jeder der gestuften Schlitze einen schmaleren Teil und einen breiteren Teil aufweist, und wobei die Nase (66) sich entlang des breiteren Teils des gestuften Schlitzes der oberen Sperrklinke und entlang des schmaleren Teils des gestuften Schlitzes der unteren Sperrklinke bewegt, wenn die obere Sperrklinke in eine erste Richtung gedreht wird, während die Nase (66) sich entlang des bereiteren Abschnitts des gestuften Schlitzes der unteren Sperrklinke und entlang des schmaleren Abschnitts des gestuften Schlitzes der oberen Sperrklinke bewegt, wenn die untere Sperrklinke in eine zweite, entgegengesetzte Richtung gedreht wird.

10. Höhenverstellvorrichtung für einen Fahrzeugsitz mit einem Höhenverstellmechanismus und einer Verstellanordnung nach einem der Ansprüche 1 bis 9.

## Revendications

1. - Ensemble de réglage (100) pour un mécanisme de réglage de hauteur d'un dispositif de réglage de hauteur pour un siège de véhicule, ledit ensemble de réglage comprenant un élément de sortie (10), un élément d'actionnement (20) et une unité de transmission de mouvement pour transmettre de manière sélective un mouvement dudit élément d'actionnement (20) audit élément de sortie (10), ladite unité de transmission de mouvement comprenant une sous-unité d'entraînement (30) et une sous-unité de freinage (40), et ladite sous-unité d'entraînement (30) comprenant un arbre (32) pour entraîner l'élément de sortie (10), ladite sous-unité d'entraînement (30) comprenant en outre une plaque (34), laquelle comporte un rebord en saillie externe (344) équipé d'un engrenage à denture intérieure (346), et au moins un cliquet de verrouillage (36, 38), lequel comporte, sur une surface de celui-ci, des dents en saillie radiale (362, 382), ledit au moins un cliquet de verrouillage (36, 38) étant apte à être commuté entre une configuration déverrouillée, dans laquelle ses dents (362, 382) sont désengagées dudit engrenage à denture intérieure (346) dudit rebord de ladite plaque et dans laquelle ledit élément d'actionnement est déconnecté dudit élément de sortie, et une configuration verrouillée, dans laquelle ses dents (362, 382) s'engagent avec une partie dudit engrenage à denture intérieure (346) dudit rebord de ladite plaque et ledit élément d'actionnement est en transmission de liaison de mouvement avec ledit élément de sortie, **caractérisé par le fait que** ledit au moins un cliquet de verrouillage (36, 38) est entraîné par une cheville (210) prévue sur ledit élément d'actionnement (20) de telle sorte qu'il peut être commuté entre ladite configuration déverrouillée et ladite configuration verrouillée.

2. - Ensemble de réglage (100) selon la revendication 1, dans lequel ledit au moins un cliquet de verrouillage (36, 38) comporte une fente inclinée (364, 384) et dans lequel ladite cheville (210) prévue sur ledit élément d'actionnement (20) est reçue dans ladite fente inclinée (364, 384) et peut s'engager avec le bord de ladite fente inclinée pour déplacer ledit au moins un cliquet de verrouillage de la configuration déverrouillée à la configuration verrouillée et/ou inversement.

3. - Ensemble de réglage (100) selon la revendication 1, dans lequel ledit élément d'actionnement déplace ledit au moins un cliquet de verrouillage de la configuration déverrouillée à la configuration verrouillée à l'encontre de la résistance élastique d'un élément élastique (50).

4. - Ensemble de réglage (100) selon l'une quelconque des revendications précédentes, dans lequel deux cliquets de verrouillage (36, 38), à savoir un cliquet de verrouillage supérieur (36) et un cliquet de verrouillage inférieur (38), sont prévus.

5. - Ensemble de réglage (100) selon les revendications 2 et 4, dans lequel les fentes inclinées (364, 384) desdits cliquets de verrouillage (36, 38) se chevauchent au moins partiellement et ladite cheville (210) pénètre à travers l'intersection desdites fentes inclinées.

6. - Ensemble de réglage (100) selon la revendication 4, dans lequel lesdites fentes inclinées (364, 384) sont agencées de telle sorte qu'un premier cliquet de verrouillage (36) peut être tourné dans un premier sens par l'élément d'actionnement, tandis qu'un second cliquet de verrouillage (38) peut être tourné dans un second sens, opposé, par l'élément d'actionnement.

7. - Ensemble de réglage (100) selon la revendication 6, comprenant en outre un élément de limitation (62) afin de limiter une rotation desdits cliquets de verrouillage.

8. - Ensemble de réglage (100) selon la revendication 7, dans lequel ledit ensemble de réglage comprend un capot (60) comportant une fente (62) qui reçoit ladite cheville (210) dudit élément d'actionnement (20) et le long de laquelle ladite cheville peut se déplacer.

9. - Ensemble de réglage (100) selon la revendication 6, dans lequel lesdits cliquets de verrouillage comprennent des fentes étagées respectives (366, 386), se chevauchant mutuellement, ledit ensemble de réglage comprenant un capot (60) comportant une languette (66) qui pénètre dans lesdites fentes étagées en chevauchement (366, 386), chacune desdites fentes étagées comprenant une partie plus étroite et une partie plus large, et ladite languette (66) se déplaçant le long de la partie plus large de la fente étagée dudit cliquet de verrouillage supérieur et le long de la partie plus étroite de la fente étagée dudit cliquet de verrouillage inférieur lorsque ledit cliquet de verrouillage supérieur est tourné dans un premier sens, tandis que ladite languette (66) se déplace le long de la partie plus large de la fente étagée dudit cliquet de verrouillage inférieur et le long de la partie plus étroite de la fente étagée dudit cliquet de verrouillage supérieur lorsque ledit cliquet de verrouillage inférieur est tourné dans un second sens, opposé.

10. - Dispositif de réglage de hauteur pour un siège de véhicule comprenant un mécanisme de réglage de hauteur et un ensemble de réglage selon l'une quelconque des revendications 1 à 9.
